# EUROPEAN PATENT SPECIFICATION

(11) **EP 3 466 536 B1**
(45) Date of publication and mention of the grant of the patent: **25.03.2020**
(21) Application number: 17810280.2
(22) Date of filing: 05.06.2017
(51) Int. Cl.: B01J 23/63, B01D 53/94, B01J 37/02, F01N 3/10, F01N 3/28, B01J 23/44, B01J 23/46, B01J 35/04

(54) **EXHAUST GAS PURIFYING CATALYST**
ABGASREINIGUNGSKATALYSATOR
CATALYSEUR DE PURIFICATION DE GAZ D'ÉCHAPPEMENT

(30) Priority: 07.06.2016 JP 2016113471
(43) Date of publication of application: 10.04.2019
(73) Proprietor: Cataler Corporation, Kakegawa-city Shizuoka 437-1492 (JP)
(72) Inventor: ONOZUKA, Takashi, Kakegawa-shi Shizuoka 437-1492 (JP); MURAKAMI, Kyosuke, Kakegawa-shi Shizuoka 437-1492 (JP); TAKI, Kenichi, Kakegawa-shi Shizuoka 437-1492 (JP)
(74) Representative: Kramer Barske Schmidtchen Patentanwälte PartG mbB
(86) International application number: PCT/JP2017/020879
(87) International publication number: WO 2017/213105

(56) References cited:
- JP-A- H10 296 085
- JP-A- 2009 011 937
- JP-A- 2011 183 319
- US-A1- 2008 219 906
- US-A1- 2009 041 643
- US-A1- 2009 175 773
- US-A1- 2010 104 491
- US-A1- 2012 128 558
- US-A1- 2013 310 248

## Description

### Technical Field

The present invention relates to an exhaust gas purification catalyst. More particularly, the present invention relates to an exhaust gas purification catalyst that comprises a substrate and a catalyst coat layer formed on the surface of the substrate.

### Background Art

Three-way catalysts containing at least one noble metal from among Pt (platinum), Pd (palladium) and Rh (rhodium) are often used in order to purify exhaust gas emitted from an internal combustion engines such as an automobile engine. In a typical configuration of such three-way catalysts, a catalyst coat layer consisting of alumina is formed on the surface of a high heat-resistant ceramic substrate, and one or two or more noble metals from among Pt, Pd and Rh are supported in the catalyst coat layer. Harmful components in exhaust gas can be efficiently purified at a time through the concomitant use of Pt, Pd and Rh.

Preferably, an air-fuel ratio, which is the mixing ratio of air and gasoline that are supplied to the engine, is preferably close to the theoretical (stoichiometric) air-fuel ratio, in order to purify components in exhaust gas efficiently using such a three-way catalyst. Conventionally, Ce-containing oxides (for instance, ceria-zirconia complex oxides) having oxygen storage capacity (OSC) have been widely used as a carrier of the noble metal, for the purpose of mitigating atmosphere variations in the air-fuel ratio at which the catalyst works effectively (see, for instance, Patent Literature 1 to 3). Such Ce-containing oxides function to store oxygen from the exhaust gas when the air-fuel ratio of the exhaust gas is lean (i.e. oxygen excess atmosphere), and to release the stored oxygen when the air-fuel ratio in the exhaust gas is rich (i.e. fuel excess atmosphere). As a result a stable catalyst performance is obtained even upon fluctuations of the oxygen concentration in the exhaust gas, and the purification performance of the catalyst is enhanced.

Exhaust gas purification catalysts have been developed in recent years in which, with a view to further improving performance, noble metal catalysts are not all supported in one carrier layer, and instead the catalyst coat layer is formed into a multilayer structure having at least two layers vertically, such that Pd is supported separately in one of the layers and Rh is supported separately in the other layer. For instance, Patent Literature 1 discloses an exhaust gas purification catalyst having a catalyst coat layer made up of three layers, namely an upper layer, an interlayer and a lower layer, wherein the lower layer and the interlayer contain Pd, and the upper layer contains Rh. Patent Literatue 4 also discloses such a multilayered three-way catalyst.

### Citation List

### Patent Literature

Patent Literature 1: Japanese Translation of PCT Application No. JP-T-2005-506900
Patent Literature 2: Japanese Patent Application Publication No. 2003-112049
Patent Literature 3: Japanese Patent Application Publication No. 2011-183319
Patent Literature 4: US 2008/0219906 A1

### Summary of Invention

### Technical Problem

Generally, exhaust gas purification catalyst have a drawback in that when exhaust gas temperature is still low, for instance immediately after engine start-up, the purification performance of the catalyst is likewise low, since the catalyst has not warmed up sufficiently. Particularly in low-temperature exhaust gas, there is a large amount of hydrocarbon (cold HC) which is an unburned substance of fuel, and accordingly exhaust gas purification catalysts are demanded that allow bringing out good cold HC purification performance, in a low-temperature state immediately after engine start-up. When the temperature of the catalyst has risen sufficiently, after a while since startup, a large amount of nitrogen oxide (hot NOx) tends to be emitted from the engine in a state where a high load acts thereonto. Accordingly, exhaust gas purification catalysts are demanded that allow bringing out good hot NOx purification performance at times of high-load running. That is, exhaust gas purification catalysts are demanded that deliver both cold HC purification performance and hot NOx purification performance at a high level.

It is an object of the present invention, arrived at in the light of the above considerations, to provide an exhaust gas purification catalyst having a catalyst coat layer of multilayer structure type, and that allows bringing out both cold HC purification performance and hot NOx purification performance at a high level.

### Solution to Problem

The inventors speculated that in an exhaust gas purification catalyst provided with a catalyst coat layer of multilayer structure type in which Pd is disposed in a lower layer and Rh is disposed in an upper layer, cold HC purification performance may be increased by providing a Ce-free layer (middle layer) that does not contain a Ce-containing oxide, between the upper layer and the lower layer. Further, the inventors found that by properly prescribing the ratio of the content of Ce in the upper layer and the content of Ce in the lower layer it becomes possible to bring out both cold HC purification performance and hot NOx purification performance at a high level.

Specifically, the exhaust gas purification catalyst provided by the present invention according to appended claim 1 is an exhaust gas purification catalyst disposed in an exhaust passage of an internal combustion engine and purifying exhaust gas, the exhaust gas purification catalyst including: a substrate; and a catalyst coat layer formed on a surface of the substrate. The catalyst coat layer is formed into a multilayer structure having a lower layer provided on the substrate, a middle layer provided on the lower layer, and an upper layer provided on the middle layer. The upper layer contains Rh and a Ce-containing oxide. The lower layer contains Pd and a Ce-containing oxide. The middle layer is a Ce-free layer that contains Pd but does not contain a Ce-containing oxide. A ratio (B/A) of a content B of cerium in the lower layer to a content A of cerium in the upper layer satisfies 2≤(B/A).

Thus, a Ce-free layer is provided between the upper layer having Rh disposed therein and the lower layer having Pd disposed therein, and a Ce-containing oxide is disposed between the upper layer and the lower layer, to a specific content ratio. As a result, an optimal exhaust gas purification catalyst can be realized that strikes a good balance between hot NOx purification performance and cold HC purification performance.

In one preferred aspect of the exhaust gas purification catalyst disclosed herein, the ratio (B/A) satisfies 3≤(B/A)≤10. Both hot NOx purification performance and the cold HC purification performance can be brought out yet more suitably within such a range of content ratio (B/A) of Ce.

According to the invention, the content A of cerium in the upper layer is in the range of from 3 g/L to 30 g/L, on a CeO₂ basis, per L of volume of the substrate. Both hot NOx purification performance and cold HC purification performance can be achieved, at a higher level, within such a range of content A of Ce in the upper layer.

According to the invention, the content B of cerium in the lower layer is in the range of from 40 g/L to 70 g/L, on a CeO₂ basis, per L of volume of the substrate. Both hot NOx purification performance and cold HC purification performance can be achieved, at a higher level, within such a range of content B of cerium in the lower layer.

In one preferred aspect of the exhaust gas purification catalyst disclosed herein, the Ce-containing oxide is a ceria-zirconia complex oxide. Ceria-zirconia complex oxides have high oxygen storage and release capacity (atmosphere relaxation ability), and accordingly can be suitably used as a Ce-containing oxide appropriate for the purposes of the present invention.

### Brief Description of Drawings

[Fig. 1]

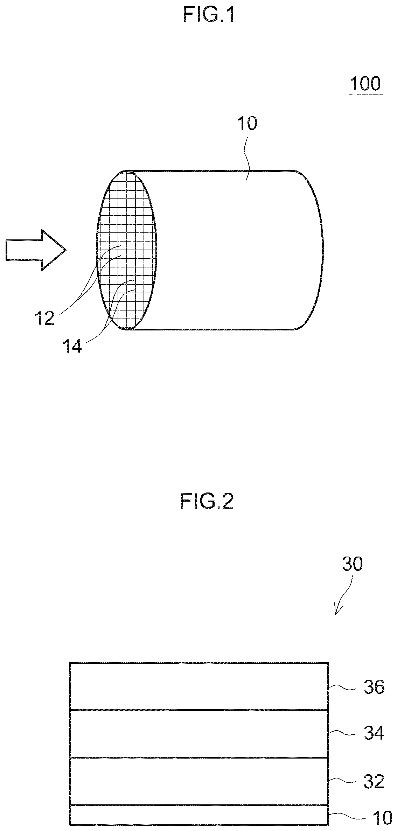

   Fig. 1 is a schematic configuration explanatory diagram of an exhaust gas purification catalyst according to an embodiment of the present invention.
[Fig. 2]
   Fig. 2 is a diagram illustrating schematically the configuration of a rib wall portion in an exhaust gas purification catalyst according to an embodiment of the present invention.

### Description of Embodiments

Preferred embodiments of the present invention will be explained next. Any features other than the features specifically set forth in the present description (for instance, the composition and so forth of a porous carrier) and which may be necessary for carrying out the present invention (for instance, general features pertaining to the arrangement of exhaust gas purification catalysts) can be regarded as instances of design matter for a person skilled in the art on the basis of known techniques in the technical field in question. The invention can be realized on the basis of the disclosure of the present specification and common technical knowledge in the relevant technical field. In the explanation below, exhaust gas having a lean, stoichiometric or rich air-fuel ratio denotes exhaust gas having an air-fuel ratio similar to the air-fuel ratio of exhaust gas emitted from an internal combustion engine upon combustion of a lean, stoichiometric or rich mixed gas, respectively, in the internal combustion engine, or exhaust gas resulting from post-supply of a hydrocarbon to the above exhaust gas.

The exhaust gas purification catalyst disclosed herein is made up of a substrate and a catalyst coat layer formed on the surface of the substrate, the catalyst coat layer being formed into a multilayer structure.

Fig. 1 is a schematic diagram of a typical example of an exhaust gas purification catalyst. The exhaust gas purification catalyst 100 according to the present embodiment is provided with a honeycomb substrate 10 having a plurality of regularly arrayed cells 12, and rib walls 14 that constitute the cells 12.

Conventional substrates of various materials and forms that are utilized in this kind of applications can be used as the substrate 10 that makes up the exhaust gas purification catalyst 100 disclosed herein. For instance, a honeycomb substrate having a honeycomb structure formed out of a ceramic such as cordierite, silicon carbide (SiC) or the like, or out of an alloy (stainless steel or the like) can be suitably used herein. As an example, a honeycomb substrate having an external cylindrical shape is provided with through-holes (cells) as exhaust gas passages in the cylinder axis direction, such that exhaust gas can come into contact with partition walls (rib walls) that partition the respective cells. A foam shape, pellet shape or the like can be adopted, besides a honeycomb shape, as the shape of the substrate. An elliptic cylinder shape or polygonal cylinder shape may be adopted, instead of a cylinder, as the outer shape of the substrate as a whole. In the present specification, the term volume of the substrate 10 refers to bulk volume, which encompasses the volume of internal voids (cells), in addition to the net volume of the substrate (i.e. including the catalyst coat layer formed inside these voids (cells)).

### <Catalyst coat layer>

Fig. 2 is a diagram illustrating schematically the configuration of a surface portion of the rib wall 14 of the honeycomb substrate 10 of Fig. 1. The rib walls 14 are provided with the substrate 10 and with a catalyst coat layer 30 having a three-layer structure and formed on the surface of the substrate 10. The catalyst coat layer 30 having such a three-layer structure is formed into a multilayer structure having a lower layer 32 provided one substrate 10, a middle layer 34 provided on the lower layer 32, and an upper layer 36 provided on the middle layer 34.

In the art disclosed herein, the upper layer 36 contains Rh and a Ce-containing oxide. The lower layer 32 contains Pd and a Ce-containing oxide (oxide that contains cerium). The middle layer 34 is a Ce-free layer that contains Pd but does not contain a Ce-containing oxide. A ratio (B/A) of the content B of Ce in the lower layer 32 to the content A of Ce in the upper layer 36 satisfies 2≤(B/A). As a result it becomes possible to achieve both cold HC purification performance and hot NOx purification performance. Conceivable reasons why such an effect is elicited include, although not particularly limited to, the following. Specifically, HC selective reactivity is high in the exhaust gas purification catalyst provided with the Ce-free layer (middle layer) 34 that contains Pd and that is disposed between the upper layer 36 in which Rh is disposed and the lower layer 32 in which Pd is disposed, since Pd and the Ce-containing oxide are not co-present in the middle layer 34. As a result, it becomes possible to achieve high HC purification performance and efficient purification of cold HC in the exhaust gas, also in a low-temperature state immediately after engine start-up. By providing the Ce-free layer 34 between the lower layer 32 and the upper layer 36, on the other hand, oxygen storage and release capacity (atmosphere relaxation ability) may be insufficient, and hot NOx purification performance at high load may tend to drop. In an exhaust gas purification catalyst in which the Ce-containing oxide is disposed in the upper layer 36 and the lower layer 32 at the above specific content ratio, the atmosphere in the middle layer 34 is relaxed effectively, and hot NOx emissions are suppressed, by the upper layer 36, and lower layer 32. This is deemed to contribute to enhancing hot NOx purification performance and cold HC purification performance.

The ratio (B/A) of the content B of Ce in the lower layer 32 to the contentA of Ce in the upper layer 36 is appropriately set to 2 or higher, preferably 2.5 or higher, and more preferably 3 or higher, from the viewpoint of better eliciting the effect derived from incorporating a Ce-containing oxide in both the upper layer 36 and the lower layer 32. The upper limit of the content ratio of Ce is not particularly restricted, and is appropriately set to about 15 or lower, for instance from the viewpoint of better bringing out a function as a catalyst, and is preferably 12 or lower, and more preferably 10 or lower (for instance, 8 or lower). A more pronounced effect of increasing the hot NOx purification rate can be achieved by incorporating a Ce-containing oxide into both the upper layer and the lower layer at such content ratios. The art disclosed herein can be preferably implemented in an embodiment where the content ratio of Ce contained in the lower layer 32 to Ce contained in the upper layer 36 lies in the range of 3 to 10.

In a preferred embodiment, the total of the content A of Ce in the upper layer 36 and the content B of Ce in the lower layer 32, on a CeO₂ basis, per L of volume of substrate, is preferably 45 g/L or higher, yet more preferably 50 g/L or higher, and particularly preferably 55 g/L or higher, for instance from the viewpoint of increasing the hot NOx purification rate. The upper limit of the total (A+B) of the above content is set to 100 g/L or lower, and is preferably 90 g/L or lower and more preferably to 80 g/L or lower. The total (A+B) of the above content may be for instance 75 g/L or lower, and for instance 70 g/L or lower.

### <Lower layer>

The lower layer 32 disclosed herein is a Ce-containing layer that contains a Ce-containing oxide, and that contains Pd as a noble metal catalyst. Examples of the Ce-containing oxide include for instance CeO₂ (ceria) and a CeO₂-containing complex oxide that contains ceria. A ceria-zirconia complex oxide (CeO₂-ZrO₂ complex oxide) can be preferably used among the foregoing. By incorporating the Ce-containing oxide into the lower layer 32 in addition to the upper layer 36, the oxygen storage and release capacity is properly brought out in a deep lean atmosphere (for instance, oxygen not completely absorbed in the upper layer 36 becomes absorbed in the lower layer 32, and thereby oxygen poisoning of Pd in the middle layer 34 is suppressed), and NOx emissions can be effectively suppressed.

The content B of Ce in the lower layer 32 is according to the invention 40 g/L or higher, yet more preferably 45 g/L or higher and particularly preferably 50 g/L or higher, on a CeO₂ basis, per L of volume of substrate, for instance from the viewpoint of suppressing NOx emissions. The content B of Ce in the lower layer 32 according to the invention is 70 g/L or lower, yet more preferably 60 g/L or lower, and particularly preferably 55 g/L or lower. The art disclosed herein can be preferably implemented in an embodiment where the content B of Ce in the lower layer 32 is 45 g/L to 55 g/L.

In a case where the Ce-containing oxide in the lower layer 32 is a ceria-zirconia complex oxide, the mixing proportion of CeO₂ and ZrO₂ in the ceria-zirconia complex oxide may be CeO₂:ZrO₂=20:80 to 60:40, preferably 30:70 to 40:60. When the mixing proportion of CeO₂ lies in the above range it becomes possible to achieve high catalytic activity and OSC (oxygen storage and release capacity) in the lower layer 32 that contains Pd. The amount of ceria-zirconia complex oxide in the lower layer 32 is not particularly limited, but is for instance 80 g/L to 200 g/L per L of volume of substrate, preferably 100 g/L to 180 g/L and more preferably 110 g/L to 150 g/L, for instance from the viewpoint of curtailing hot NOx emissions.

A metal oxide (hereafter also referred to as "non-Ce-containing oxide") other than a Ce-containing oxide may be mixed into the lower layer 32. Examples of such a non-Ce-containing oxide include for instance aluminum oxide (alumina: Al₂O₃), zirconium oxide (zirconia: ZrO₂) and solid solutions of the foregoing. Among these Al₂O₃ is preferably used. Herein, Al₂O₃ and Ce-containing oxide are preferably mixed within a mass mixing ratio (Al₂O₃:Ce-containing oxide) range of 5:95 to 50:50 (typically 10:90 to 30:70). The content of the non-Ce-containing oxide in the lower layer 32 is not particularly limited, and is preferably for instance 5 g/L to 80 g/L (preferably 10 g/L to 40 g/L, typically 15 g/L to 30 g/L) per L of volume of substrate.

The Ce-containing oxide and non-Ce-containing oxide in the lower layer 32 disclosed herein may have barium (Ba) added thereto. The addition amount of Ba, on a barium sulfate basis, satisfies preferably 0.1 parts by mass to 10 parts by mass, more preferably satisfies 0.5 parts by mass to 5 parts by mass, and yet more preferably satisfies 1 part by mass to 3 parts by mass, with respect to 100 parts by mass as the total of the Ce-containing oxide and non-Ce-containing oxide. The content of barium in the lower layer 32 is not particularly limited, and is preferably for instance 0.1 g/L to 15 g/L (preferably 0.5 g/L to 5 g/L, typically 1 g/L to 3 g/L) per L of volume of substrate.

The lower layer 32 may have added thereto other materials (typically an inorganic oxide) as an auxiliary component. Examples of substances that can be added to the catalyst layer include rare earth elements such as lanthanum (La) and yttrium (Y), alkaline earth elements such as calcium, and transition metal elements. Among the foregoing, rare earth elements such as lanthanum or yttrium are suitably used as a stabilizer, from the viewpoint of allowing increasing specific surface area at high temperature, without hindering catalytic function. The content ratio of these auxiliary components is preferably set to 20 parts by mass or less (preferably 10 parts by mass or less) with respect to 100 parts by mass of Ce-containing oxide.

The Pd contained in the lower layer 32 disclosed herein is supported on at least one from among the Ce-containing oxide and non-Ce-containing oxide described above. The carrying amount of Pd is not particularly limited, and it is appropriate to set a range of 0.01 parts by mass to 0.5 parts by mass (for instance, 0.03 parts by mass to 0.3 parts by mass, and preferably 0.05 parts by mass to 0.1 parts by mass) with respect to 100 parts by mass as the total mass of the Ce-containing oxide and non-Ce-containing oxide contained in the lower layer 32. The content of Pd in the lower layer 32 is not particularly limited, and is preferably for instance 0.05 g/L to 2 g/L, and typically 0.1 g/L to 2 g/L (preferably 0.1 g/L to 0.5 g/L, typically 0.1 g/L to 0.3 g/L) per L of volume of substrate.

The lower layer 32 disclosed herein may contain another noble metal catalyst, so long as the performance of Pd is not impaired thereby. Examples of noble metal catalysts other than Pd include for instance ruthenium (Ru), iridium (Ir), osmium (Os) and the like.

The forming amount (coating amount) of the lower layer 32 is not particularly limited, and is for instance preferably about 80 g/L to 300 g/L (typically 100 g/L to 250 g/L, for instance 120 g/L to 200 g/L) per L of volume of substrate. If the forming amount of the lower layer 32 is excessively small, the function as a catalyst coat layer may be poor. If the forming amount of the lower layer 32 is too large, pressure loss might increase as exhaust gas passes through the cells in the honeycomb substrate 10.

### <Middle layer>

The middle layer 34 disclosed herein contains Pd as the noble metal catalyst, and a carrier that supports the Pd. The middle layer 34 is a Ce-free layer that does not contain a Ce-containing oxide. Selective reactivity towards HC is thus increased by providing the Ce-free layer 34 that does not contain a Ce-containing oxide, in the middle between the lower layer 32 having Pd disposed therein and the upper layer 36 having Rh disposed therein. Moreover, by prescribing the middle layer containing Pd to be Ce-free, release of oxygen via Pd in a rich atmosphere is precluded. This promotes metallization of Pd at the time of restart (for instance, immediately after fuel cutting and/or idling stop), and NOx purification performance is improved.

The carrier that supports Pd in the middle layer 34 disclosed herein can be a non-Ce-containing oxide. A porous metal oxide having excellent heat resistance is preferably used as the non-Ce-containing oxide. Examples of such a non-Ce-containing oxide include for instance aluminum oxide (alumina: Al₂O₃), zirconium oxide (zirconia: ZrO₂) and solid solutions of the foregoing. Among these Al₂O₃ is preferably used in terms of durability (in particular, heat resistance). Sintering of Pd in the middle layer 34 can be suppressed by virtue of the fact that the Pd is supported on a non-Ce-containing oxide alone, and is not allowed to come close to an element of high basicity such as CeO₂. Further, absorption of sulfur (S) is reduced and S poisoning is suppressed, since Pd in the middle layer 34 is supported on the non-Ce-containing oxide. The content of the carrier in the middle layer 34 is not particularly limited, and is preferably for instance 10 g/L to 100 g/L (for instance, 20 g/L to 80 g/L, preferably 30 g/L to 60 g/L, typically 35 g/L to 50 g/L) per L of volume of substrate.

Barium (Ba) may be added to the carrier that supports the Pd of the middle layer 34 disclosed herein. Through addition of Ba to the carrier of the middle layer 34, HC poisoning of Pd is prevented, and catalytic activity (in particular, low-temperature activity) is enhanced. Dispersibility of Pd in the carrier is increased, and sintering that accompanies grain growth in Pd at high temperature is better suppressed. The addition amount of Ba to the carrier disclosed herein satisfies preferably 20 parts by mass to 80 parts by mass, on a barium sulfate basis, more preferably satisfies 30 parts by mass to 60 parts by mass, and yet more preferably satisfies 40 parts by mass to 55 parts by mass, with respect to 100 parts by mass of the carrier. By prescribing the content of Ba to lie within the above range it becomes possible to bring out high catalytic activity also immediately after engine start-up. The content of barium in the middle layer 34 is not particularly limited, and is preferably for instance 5 g/L to 50 g/L (preferably 10 g/L to 30 g/L, typically 15 g/L to 25 g/L) per L of volume of substrate.

The middle layer 34 may have added thereto other materials (typically an inorganic oxide) as an auxiliary component. Examples of substances that can be added to the catalyst layer include rare earth elements such as lanthanum (La) and yttrium (Y), alkaline earth elements such as calcium, and transition metal elements. Among the foregoing rare earth elements such as lanthanum or yttrium are suitably used as a stabilizer, from the viewpoint of allowing increasing specific surface area at high temperature, without hindering catalytic function. The content ratio of these auxiliary components is preferably set to 20 parts by mass or less (preferably 10 parts by mass or less) with respect to 100 parts by mass of non-Ce-containing oxide.

The Pd contained in the middle layer 34 disclosed herein is supported on the carrier made up of the non-Ce-containing oxide described above. The carrying amount of Pd is not particularly limited, and it is appropriate to set a range of 0.5 parts by mass to 20 parts by mass (for instance, 1 part by mass to 10 parts by mass, and preferably 3 parts by mass to 6 parts by mass) with respect to 100 parts by mass of the carrier contained in the middle layer 34. A smaller carrying amount than the above ranges is disadvantageous in that sufficient catalytic activity may fail to be achieved, while the effect derived from a larger carrying amount than the above ranges hits a plateau, and becomes disadvantageous in terms of cost. The content of Pd in the middle layer 34 is not particularly limited, and is preferably for instance 0.1 g/L to 10 g/L (preferably 0.5 g/L to 5 g/L, typically 1 g/L to 3 g/L) per L of volume of substrate. The method for supporting Pd on the carrier of the middle layer 34 is not particularly limited. Preparation can involve for instance impregnating a powder of a non-Ce-containing oxide with an aqueous solution that contains a palladium salt (for instance, a nitrate) or a palladium complex (for instance, a tetraammine complex), followed by drying and firing.

In a preferred embodiment, the mass ratio of Pd disposed in the lower layer 32 to Pd disposed in the middle layer 34 (lower layer / middle layer) is 0.5 or lower (for instance, in the range of 0.005 to 0.5). A higher catalytic activity can be achieved by prescribing the mass ratio of Pd to lie in the above range. The mass ratio of Pd is preferably 0.3 or lower, more preferably 0.1 or lower (for instance, in the range of 0.01 to 0.1). The art disclosed herein can be preferably implemented in an embodiment where for instance the mass ratio of Pd disposed in the lower layer 32 to Pd disposed in the middle layer 34 lies in the range of 0.03 to 0.08.

The middle layer 34 disclosed herein may contain another noble metal catalyst, so long as the performance of Pd is not impaired thereby. Examples of noble metal catalysts other than Pd include for instance ruthenium (Ru), iridium (Ir), osmium (Os) and the like.

The forming amount (coating amount) of the middle layer 34 is not particularly limited, and is preferably for instance about 20 g/L to 100 g/L (typically 40 g/L to 80 g/L) per L of volume of substrate. If the forming amount of the middle layer 34 is excessively small, the function as a catalyst coat layer may be poor. If the forming amount of the middle layer 34 is too large, pressure loss might increase as exhaust gas passes through the cells in the honeycomb substrate.

### <Upper layer>

The upper layer 36 that makes up the catalyst coat layer disclosed herein contains Rh as the noble metal catalyst, and a carrier that supports the noble metal catalyst.

The carrier that supports the noble metal catalyst of the upper layer 36 disclosed herein can be a Ce-containing oxide. Examples of the Ce-containing oxide include for instance CeO₂ (ceria) and CeO₂-containing complex oxides that contains ceria. A ceria-zirconia complex oxide (CeO₂-ZrO₂ complex oxide) can be preferably used among the foregoing. Exhaust gas does not diffuse readily up to the lower layer 32 at times of high load (high flow rate). Accordingly, by incorporating the Ce-containing oxide into the upper layer 36, in addition to the lower layer 32, the oxygen storage and release capacity is properly brought out at times high load (for instance, oxygen poisoning of Pd at the middle layer 34 can be suppressed through absorption of oxygen at the upper layer 36), and thereby NOx emissions can be effectively suppressed.

The content A of Ce in the upper layer 36 is not particularly limited so long as it satisfies the above relationship with respect to the content A of Ce in the lower layer 32, but is for instance about 1 g/L or higher, according to the invention 3 g/L or higher, more preferably 4.5 g/L or higher, and yet more preferably 6 g/L or higher, on a CeO₂ basis, per L of volume of substrate, for instance from the viewpoint of suppressing NOx emissions at high load. The content A of Ce in the upper layer 36 is according to the invention 30 g/L or lower, more preferably 25 g/L or lower, yet more preferably 20 g/L or lower and particularly preferably 18 g/L or lower, on a CeO₂ basis, in terms of easier metallization (activation) of Rh. The art disclosed herein can be preferably implemented in an embodiment where the content of Ce in the upper layer 36 is 6 g/L to 18 g/L.

In a case where the Ce-containing oxide in the upper layer 36 is a ceria-zirconia complex oxide, the mixing proportion of CeO₂ and ZrO₂ in the ceria-zirconia complex oxide may be CeO₂:ZrO₂=5:95 to 50:50, preferably 10:90 to 40:60, and more preferably 15:85 to 30:70. When the mixing proportion of CeO₂ lies in the above range it becomes possible to achieve high catalytic activity and OSC (oxygen storage and release capacity) in the upper layer 36 that contains Rh. The amount of ceria-zirconia complex oxide in the upper layer 36 is not particularly limited, but is for instance 20 g/L to 120 g/L, preferably 25 g/L to 100 g/L and more preferably 30 g/L to 90 g/L, per L of volume of substrate, for instance from the viewpoint of curtailing hot NOx emissions.

A metal oxide (non-Ce-containing oxide) other than a Ce-containing oxide may be mixed into the upper layer 36 disclosed herein. Examples of such a non-Ce-containing oxide include for instance aluminum oxide (alumina: Al₂O₃), zirconium oxide (zirconia: ZrO₂) and solid solutions of the foregoing. Among these Al₂O₃ is preferably used. Herein, Al₂O₃ and Ce-containing oxide are preferably mixed within a mass mixing ratio (Al₂O₃:Ce-containing oxide) range of 95:5 to 5:95 (typically 70:30 to 20:80). The content of the non-Ce-containing oxide in the upper layer 36 is not particularly limited, and is preferably for instance 5 g/L to 50 g/L (preferably 10 g/L to 40 g/L, typically 15 g/L to 30 g/L) per L of volume of substrate.

The upper layer 36 may have added thereto other materials (typically an inorganic oxide) as an auxiliary component. Examples of substances that can be added to the catalyst layer include rare earth elements such as lanthanum (La) and yttrium (Y), alkaline earth elements such as calcium, and transition metal elements. Among the foregoing rare earth elements such as lanthanum or yttrium are suitably used as a stabilizer, from the viewpoint of allowing increasing specific surface area at high temperature, without hindering catalytic function. The content ratio of these auxiliary components is preferably set to 20 parts by mass or less (preferably 10 parts by mass or less) with respect to 100 parts by mass of Ce-containing oxide.

The Rh contained in the upper layer 36 disclosed herein is supported on the Ce-containing oxide described above. The carrying amount of Rh is not particularly limited, and it is appropriate to set a range of 0.05 parts by mass to 2 parts by mass (for instance, 0.1 parts by mass to 1 part by mass, preferably 0.2 parts by mass to 0.5 parts by mass) with respect to 100 parts by mass of the Ce-containing oxide contained in the upper layer 36. The content of Rh in the upper layer 36 is not particularly limited, and is preferably for instance 0.01 g/L to 1 g/L (preferably 0.05 g/L to 0.5 g/L, typically 0.1 g/L to 0.3 g/L) per L of volume of substrate.

The mass ratio (Pd/Rh) of Pd disposed in the lower layer 32 and the middle layer 34 to Rh disposed in the upper layer 36 is 2.5 or higher (for instance, in the range of 2.5 to 40, typically 5 to 40). Harmful gases in the exhaust gas can be better purified when the mass ratio of Pd/Rh lies within the above range. The mass ratio of Pd/Rh is preferably 8 or higher, and more preferably 10 or higher. The art disclosed herein can be preferably implemented in an embodiment where for instance the mass ratio of Pd disposed in the lower layer 32 and the middle layer 34 to Rh disposed in the upper layer 36 lies in the range of 8 to 30 (typically 10 to 15).

The upper layer 36 disclosed herein may contain another noble metal catalyst, so long as the performance of Rh and/or Pt is not impaired thereby. Examples of noble metal catalysts other than Pd include for instance ruthenium (Ru), iridium (Ir), osmium (Os) and the like.

The forming amount (coating amount) of the upper layer 36 is not particularly limited, and is for instance preferably about 50 g/L to 180 g/L (typically 75 g/L to 150 g/L, for instance 90 g/L to 120 g/L) per L of volume of substrate. If the forming amount of the upper layer 36 is excessively small, the function as a catalyst coat layer may be poor. If the forming amount of the upper layer 36 is too large, pressure loss might increase as exhaust gas passes through the cells in the honeycomb substrate 10.

### <Method for forming the catalyst coat layer>

The catalyst coat layer 30 may be formed on the basis of slurries that are different between the lower layer 32, the middle layer 34 and the upper layer 36. For instance, a lower layer slurry for forming the lower layer 32, a middle layer slurry for forming the middle layer 34, and an upper layer slurry for forming the upper layer 36 are prepared. The lower layer slurry contains Pd, a Ce-containing oxide and other lower layer constituent components (for instance, barium). The upper layer slurry contains a Ce-containing oxide that supports Rh, and other upper layer constituent components (for instance, a non-Ce-containing oxide). The portion of the substrate 10 at which the lower layer 32 is to be formed (herein, the entire substrate) is wash-coated with the lower layer slurry, to thereby form the lower layer 32 on the surface of the substrate 10. After formation of the lower layer 32, the portion of the substrate 10 on which the middle layer 34 is to be formed (herein, the entire substrate) is wash-coated with the slurry for middle layer formation, to thereby form the middle layer 34 on the lower layer 32. After formation of the middle layer 34, the portion of the substrate 10 on which the upper layer 36 is to be formed (herein, the entire substrate) is wash-coated with the slurry for upper layer formation, to thereby form the upper layer 36 on the middle layer 34. The catalyst coat layer 30 provided with the upper layer 36, the middle layer 34 and the lower layer 32 can be formed in that manner. A binder may be incorporated into the slurries in order to bring the slurries to suitably come into closely contact with the substrate, in the process of forming the catalyst coat layer 30 by wash coating. For instance, alumina sol or silica sol is preferably used as the binder. The viscosity of the slurry may be adjusted as appropriate in such a manner that the slurries flow easily into the cells of the substrate (for instance, a honeycomb substrate). The drying conditions of the slurries wash-coated on the surface of the substrate 10 depend on the shape and dimensions of the substrate and/or the carrier, but typically involve about 80°C to 300°C (for instance, 100°C to 250°C) for about 1 to 10 hours, and the firing conditions involve about 400°C to 1000°C (for instance, 500°C to 700°C) for about 1 to 4 hours.

The exhaust gas purification catalyst 100 according to an embodiment of the present invention has been explained above, but the present invention is not limited to the above embodiment.

In the above-described embodiment, for instance the catalyst coat layer 30 has a three-layer structure made up of the lower layer 32 provided on the substrate 10, the middle layer 34 provided on the lower layer 32, and the upper layer 36 provided on the middle layer 34, but the structure may have four or more layers, with other layers (for instance, another layer formed on the upper layer 36) in addition to the above three layers. Further, the catalyst coat layer 30 need not exhibit a multilayer structure, with the upper layer 36, the middle layer 34 and the lower layer 32 extending over the entirety of the substrate (for instance, a honeycomb substrate) 10; instead, a three-layer structure may be formed in which part of each layer 32, 34, 36 (for instance, part of the upper layer 36, part of the middle layer 34, and part of the lower layer 32) are partially laid up on each other.

Test examples pertaining to the present invention will be explained below, but the present invention is not meant to be limited to the test examples below.

### <Example 1>

Herein, a slurry A for lower layer formation was obtained by mixing 30 g of alumina powder, a Pd nitrate solution (0.1 g in terms of Pd), 125 g of a CeO₂-ZrO₂ complex oxide (50 g in terms of CeO₂), 2 g of barium sulfate, and water. The entirety of a monolith honeycomb substrate (volume 1 L) was wash-coated with the slurry A for lower layer formation, with drying at 250°C for 1 hour and firing at 500°C for 1 hour, to thereby form a lower layer on the substrate. Then a slurry B for middle layer formation was obtained by mixing 40 g of alumina powder supporting 2 g of Pd, 20 g of barium sulfate, and water. The entirety of the honeycomb substrate was wash-coated with the slurry B for middle layer formation, with drying at 250°C for 1 hour and firing at 500°C for 1 hour, to thereby form a middle layer on the lower layer. Then a slurry C for upper layer formation was obtained by mixing 60 g of a CeO₂-ZrO₂ complex oxide (12 g in terms of CeO₂) having 0.2 g of Rh supported thereon, 30 g of alumina powder, and water. The entirety of the honeycomb substrate was wash-coated with the slurry C for upper layer formation, with drying at 250°C for 1 hour and firing at 500°C for 1 hour, to thereby form an upper layer on the middle layer. The exhaust gas purification catalyst according to the present example was obtained in that manner.

### <Example 2>

In the present example, an exhaust gas purification catalyst was obtained in accordance with the same procedure as in Example 1, but herein the amount of CeO₂-ZrO₂ complex oxide in the slurry A for lower layer formation of Example 1 was modified to 113 g (45 g in terms of CeO₂).

### <Example 3>

In the present example, an exhaust gas purification catalyst was obtained in accordance with the same procedure as in Example 1, but herein the amount of CeO₂-ZrO₂ complex oxide in the slurry A for lower layer formation of Example 1 was modified to 138 g (55 g in terms of CeO₂).

### <Example 4>

In the present example, an exhaust gas purification catalyst was obtained in accordance with the same procedure as in Example 1, but herein the amount of CeO₂-ZrO₂ complex oxide in the slurry C for upper layer formation of Example 1 was modified to 30 g (6 g in terms of CeO₂).

### <Example 5>

In the present example, an exhaust gas purification catalyst was obtained in accordance with the same procedure as in Example 1, but herein the amount of CeO₂-ZrO₂ complex oxide in the slurry C for upper layer formation of Example 1 was modified to 90 g (18 g in terms of CeO₂).

### <Example 6>

In the present example, an exhaust gas purification catalyst was obtained in accordance with the same procedure as in Example 1, but herein the amount of CeO₂-ZrO₂ complex oxide in the slurry C for upper layer formation of Example 1 was modified to 45 g (9 g in terms of CeO₂).

### <Example 7>

In the present example, an exhaust gas purification catalyst was obtained in accordance with the same procedure as in Example 1, but herein the amount of CeO₂-ZrO₂ complex oxide in the slurry A for lower layer formation of Example 1 was modified to 100 g (40 g in terms of CeO₂).

### <Example 8>

In the present example, an exhaust gas purification catalyst was obtained in accordance with the same procedure as in Example 1, but herein the amount of CeO₂-ZrO₂ complex oxide in the slurry C for upper layer formation of Example 1 was modified to 100 g (20 g in terms of CeO₂).

### <Comparative example 1>

Herein, a slurry D for lower layer formation was obtained by mixing 60 g of alumina powder, a Pd nitrate solution (2 g in terms of Pd), 125 g of a CeO₂-ZrO₂ complex oxide (50 g in terms of CeO₂), 2 g of barium sulfate, and water. The entirety of a monolith honeycomb substrate (volume 1 L) was wash-coated with the slurry D for lower layer formation, with drying at 250°C for 1 hour and firing at 500°C for 1 hour, to thereby form a lower layer. Further, a slurry E for upper layer formation was obtained by mixing 60 g of a CeO₂-ZrO₂ complex oxide (12 g in terms of CeO₂) having 0.2 g of Rh supported thereon, 70 g of alumina powder, and water. The entirety of the monolith honeycomb substrate (volume 1 L) was wash-coated with the slurry E for upper layer formation, with drying at 250°C for 1 hour and firing at 500°C for 1 hour, to thereby form an upper layer on the lower layer. The exhaust gas purification catalyst according to the present example was thus obtained.

### <Comparative example 2>

An exhaust gas purification catalyst was obtained in accordance with the same procedure as in Example 1, but herein the amount of CeO₂-ZrO₂ complex oxide in the slurry A for lower layer formation in Example 1 was modified to 0 g (i.e. no CeO₂-ZrO₂ complex oxide was added).

### <Comparative example 3>

In the present example, an exhaust gas purification catalyst was obtained in accordance with the same procedure as in Example 1, but herein the 60 g of CeO₂-ZrO₂ complex oxide in the slurry C for upper layer formation of Example 1 was modified to 60 g of ZrO₂ oxide.

### <Comparative example 4>

In the present example, an exhaust gas purification catalyst was obtained in accordance with the same procedure as in Example 1, but herein the amount of CeO₂-ZrO₂ complex oxide in the slurry A for lower layer formation of Example 1 was modified to 30 g (12 g in terms of CeO₂), and the amount of CeO₂-ZrO₂ complex oxide in the slurry C for upper layer formation was modified to 250 g (50 g in terms of CeO₂).

Table 1 summarizes the content B of CeO₂ in the lower layer, the content of CeO₂ in the middle layer, the content A of CeO₂ in the upper layer, and the ratio (B/A) of the content B of CeO₂ in the lower layer to the content A of CeO₂ in the upper layer.

### [Table 1]

**Table 1**

| | CeO₂ content [g/L] | | | | Emissions [g/km] | |
|---|---|---|---|---|---|---|
| | Lower layer (B) | Middle layer | Upper layer (A) | Lower layer (B)/Upper layer (A) | Hot NOx | Cold HC |
| Example 1 | 50 | 0 | 12 | 4.2 | 0.00953 | 0.01682 |
| Example 2 | 45 | 0 | 12 | 3.8 | 0.00999 | 0.01676 |
| Example 3 | 55 | 0 | 12 | 4.6 | 0.01044 | 0.01701 |
| Example 4 | 50 | 0 | 6 | 8.3 | 0.0105 | 0.01655 |
| Example 5 | 50 | 0 | 18 | 2.8 | 0.0105 | 0.01734 |
| Example 6 | 50 | 0 | 9 | 5.6 | 0.00962 | 0.01701 |
| Example 7 | 40 | 0 | 12 | 3.3 | 0.01109 | 0.01655 |
| Example 8 | 50 | 0 | 20 | 2.5 | 0.01288 | 0.01677 |
| Com. example 1 | | 50 | 12 | 4.2 | 0.01467 | 0.023 |
| Com. example 2 | 0 | 0 | 12 | 0 | 0.01394 | 0.01582 |
| Com. example 3 | 50 | 0 | 0 | - | 0.01354 | 0.01612 |
| Com. example 4 | 12 | 0 | 50 | 0.24 | 0.0243 | 0.01982 |

### <Endurance test>

The exhaust gas purification catalyst of each example was attached to a gasoline engine having a displacement of 4 L, and was subjected to a steady endurance test for 20 hours.

### <Purification performance evaluation>

After the endurance test, NMHC (non-methane hydrocarbon) and NOx emissions contained in the exhaust gas after having passed through each exhaust gas purification catalyst was measured in order to compare the purification performance of the exhaust gas purification catalysts of the examples. The evaluation engine was a gasoline engine having a displacement of 1 L, and the measurement mode was set to a JC08 mode. In the JC08 mode, the test is performed both for a state (hot mode) where the engine has been warmed up beforehand, and a state (cold mode) in which the engine has cooled down completely. The results are given in the corresponding columns of Table 1. In the table, NOx emissions (g/km) in the exhaust gas per travel distance, sampled in the hot mode, are given in the column "Hot NOx", and NMHC emissions (g/km) in the exhaust gas per travel distance, sampled in the cold mode, are given in the column "Cold HC".

As Table 1 illustrates, cold HC emissions in the exhaust gas purification catalyst of Comparative example 1, not provided with a Ce-free layer (middle layer) between the upper layer and the lower layer, were higher than 0.02 g/km. In Examples 1 to 8 by contrast, where a Ce-free layer (middle layer) was provided between the upper layer and the lower layer, exhibited cold HC emissions of 0.018 g/km or less, indicative of better cold HC purification performance than that of Comparative example 1. In a comparison between Examples 1 to 8 and Comparative examples 2 to 4, hot NOx emissions, higher than 0.0135/km are exhibited by Comparative examples 2 and 3, in which the CeO₂-ZrO₂ complex oxide was disposed in only either the upper layer or the lower layer, and Comparative example 4, in which a CeO₂-ZrO₂ complex oxide was disposed in both the upper layer and the lower layer and the content ratio (B/A) of CeO₂ between the upper and lower layers was set to be lower than 2. In Examples 1 to 8 by contrast, in which a CeO₂-ZrO₂ complex oxide was disposed in both the upper layer and the lower layer, and the content ratio (B/A) of CeO₂ between the upper and lower layers was set to be 2 or higher, exhibited hot NOx emissions lower than 0.013 g/km; hot NOx emissions were thus kept lower than those of Comparative examples 2 to 4. As a result, it was found that both cold HC purification performance and hot NOx purification performance can be achieved, at a high level, by an exhaust gas purification catalyst provided with a Ce-free layer between the upper layer and the lower layer, and in which the content ratio (B/A) of CeO₂ of the upper and lower layers is set to be 2 or higher.

Further, Examples 1 to 6 in which the content B of CeO₂ in the lower layer was set to 45 g/L or higher and the content A of CeO₂ in the upper layer was set to 18 g/L or lower, exhibited better hot NOx emissions results than those of Examples 7 and 8.

Concrete examples of the present invention have been explained in detail above, but the examples are merely illustrative in nature, and are not meant to limit the scope of the claims in any way. The art set forth in the claims encompasses various alterations and modifications of the concrete examples illustrated above.

### Industrial Applicability

The present invention succeeds in providing an exhaust gas purification catalyst that allows combining hot NOx purification performance and cold HC purification performance.

## Claims

1. An exhaust gas purification catalyst (100) disposed in an exhaust passage of an internal combustion engine and purifying exhaust gas emitted from the internal combustion engine, the exhaust gas purification catalyst (100) comprising:
a substrate (10); and
a catalyst coat layer (30) formed on a surface of the substrate, the catalyst coat layer (30) having a multilayer structure comprising:
a lower layer (32) provided on the substrate (10);
a middle layer (34) provided on the lower layer (32); and
an upper layer (36) provided on the middle layer (34);
the upper layer (36) comprising Rh and a first Ce-containing oxide,
the lower layer (32) comprising Pd and a second Ce-containing oxide,
the middle layer (34) being a Ce-free layer that contains Pd but does not contain a Ce-containing oxide, and
a ratio (B/A) of a content B of Ce in the lower layer (32) to a content A of Ce in the upper layer (36) satisfying 2≤(B/A), wherein
the content A of Ce in the upper layer (36) is in the range of from 3 g/L to 30 g/L, on a CeO₂ basis, per L of volume of the substrate (10), and
the content B of Ce in the lower layer (32) is in the range of from 40 g/L to 70 g/L, on a CeO₂ basis, per L of volume of the substrate (10).

2. The exhaust gas purification catalyst (100) according to claim 1, wherein the ratio (B/A) satisfies 3≤(B/A)≤10.

3. The exhaust gas purification catalyst (100) according to claim 1 or 2, wherein the first and second Ce-containing oxides are a ceria-zirconia complex oxide.

## Patentansprüche

1. Abgasreinigungskatalysator (100), der in einem Abgaskanal einer Brennkraftmaschine angeordnet ist und die von der Brennkraftmaschine abgegebenen Abgase reinigt, wobei der Abgasreinigungskatalysator (100) umfasst:
ein Substrat (10); und
eine katalytische Überzugsschicht (30), die auf einer Oberfläche des Substrats ausgebildet ist, wobei die katalytische Überzugsschicht (30) eine Mehrfachschichtstruktur aufweist, umfassend:
eine untere Schicht (32), die auf dem Substrat (10) vorgesehen ist;
eine mittlere Schicht (34), die auf der unteren Schicht (32) vorgesehen ist; und
eine obere Schicht (36), die auf der mittleren Schicht (34) vorgesehen ist;
wobei die obere Schicht (36) Rh und ein erstes Ce enthaltendes Oxid enthält,
die untere Schicht (32) Pd und ein zweites Ce enthaltendes Oxid enthält,
die mittlere Schicht (34) eine Schicht ohne Ce ist, die Pd enthält, aber kein Ce enthaltendes Oxid enthält, und
ein Verhältnis (B / A) eines Anteils B von Ce in der unteren Schicht (32) zu einem Anteil A von Ce in der oberen Schicht (36) die Bedingung 2 ≤ (B / A) erfüllt, wobei
der Anteil A von Ce in der oberen Schicht (36) in dem Bereich von 3 g / l bis 30 g / l liegt, bezogen auf CeO₂, pro l Volumen des Substrats (10), und
der Anteil B an Ce in der unteren Schicht (32) in dem Bereich von 40 g / 1 bis 70 g / l liegt, bezogen auf CeO₂, pro l Volumen des Substrats (10).

2. Abgasreinigungskatalysator (100) nach Anspruch 1, wobei das Verhältnis (B / A) die Bedingung 3 ≤ (B / A) ≤ 10 erfüllt.

3. Abgasreinigungskatalysator (100) nach Anspruch 1 oder 2, wobei das erste und das zweite Ce enthaltende Oxid ein komplexes Oxid aus Ceroxid-Zirkoniumoxid sind.

## Revendications

1. Catalyseur de purification des gaz d'échappement (100) disposé dans un passage d'échappement d'un moteur à combustion interne et purifiant les gaz d'échappement émis par le moteur à combustion interne, le catalyseur de purification des gaz d'échappement (100) comprenant :
un substrat (10) ; et
une couche de revêtement catalytique (30) formée sur une surface du substrat, la couche de revêtement catalytique (30) ayant une structure multicouche comprenant :
une couche inférieure (32) prévue sur le substrat (10) ;
une couche intermédiaire (34) prévue sur la couche inférieure (32) ; et
une couche supérieure (36) prévue sur la couche intermédiaire (34) ;
la couche supérieure (36) comprenant du Rh et un premier oxyde contenant du Ce,
la couche inférieure (32) comprenant du Pd et un second oxyde contenant du Ce,
la couche intermédiaire (34) étant une couche sans Ce qui contient du Pd mais ne contient pas d'oxyde contenant du Ce, et
un rapport (B/A) d'une teneur B de Ce dans la couche inférieure (32) à une teneur A de Ce dans la couche supérieure (36) satisfaisant 2 ≤ (B/A), dans lequel
la teneur A de Ce dans la couche supérieure (36) est dans la plage de 3 g/L à 30 g/L, sur la base de par L de volume du substrat (10), et
la teneur B de Ce dans la couche inférieure (32) est dans la plage de 40 g/L à 70 g/L, sur la base de par L de volume du substrat (10).

2. Catalyseur de purification des gaz d'échappement (100) selon la revendication 1, dans lequel le rapport (B/A) satisfait 3 ≤ (B/A) ≤ 10.

3. Catalyseur de purification des gaz d'échappement (100) selon la revendication 1 ou 2, dans lequel les premier et second oxydes contenant du Ce sont un oxyde complexe de cérium-zircone.
